# EUROPEAN PATENT APPLICATION

(11) **EP 4 246 707 A1**
(43) Date of publication of application: **20.09.2023**
(21) Application number: 22807917.4
(22) Date of filing: 07.04.2022
(51) Int. Cl.: H01M 50/588, H01M 50/59, H01M 50/591, H01M 50/296, H01M 50/211

(54) **BATTERY MODULE AND BATTERY PACK INCLUDING SAME**

(30) Priority: 14.05.2021 KR 20210062769
(71) Applicant: LG Energy Solution, Ltd., Seoul 07335 (KR)
(72) Inventor: JANG, Sunghwan, Daejeon 34122 (KR); SEONG, Junyeob, Daejeon 34122 (KR); PARK, Won Kyoung, Daejeon 34122 (KR)
(74) Representative: Goddar, Heinz J.
(86) International application number: PCT/KR2022/095078
(87) International publication number: WO 2022/240270

(57) **Abstract**

A battery module according to one embodiment of the present disclosure includes a battery cell stack in which a plurality of battery cells are stacked; a module frame that houses the battery cell stack; end plates located on one side and the other side of the battery cell stack and having an opening formed therein; a terminal busbar exposed through the opening; and a blocking member that surrounds the terminal busbar, wherein upon the rise of internal pressure of the module frame, the blocking member moves to close a gap between the opening and the terminal busbar.

## Description

### [TECHNICAL FIELD]

### Cross Citation with Related Application(s)

This application claims the benefit of Korean Patent Application No. 10-2021-0062769 filed on May 14, 2021 with the Korean Intellectual Property Office, the entire contents of which are incorporated herein by reference.

The present disclosure relates to a battery module and a battery pack including the same, and more particularly, to a battery module that can suppress propagation of thermal runaway phenomenon, and a battery pack including the same.

### [BACKGROUND]

In modern society, as portable devices such as a mobile phone, a notebook computer, a camcorder and a digital camera has been daily used, the development of technologies in the fields related to mobile devices as described above has been activated. In addition, a chargeable/dischargeable secondary battery is used as a power source for an electric vehicle (EV), a hybrid electric vehicle (HEV), a plug-in hybrid electric vehicle (P-HEV) and the like, as a part of a method of solving air pollution and the like caused by existing gasoline vehicles using fossil fuel. Therefore, the need for developing the secondary battery has been increasing.

Currently commercialized secondary batteries include a nickel cadmium battery, a nickel hydrogen battery, a nickel zinc battery, and a lithium secondary battery. Among them, the lithium secondary battery has come into the spotlight because they have advantages, for example, hardly exhibiting memory effects compared to nickel-based secondary batteries and thus being freely charged and discharged, and having very low self-discharge rate and high energy density.

Such lithium secondary battery mainly uses a lithium-based oxide and a carbonaceous material as a cathode active material and an anode active material, respectively. The lithium secondary battery includes an electrode assembly in which a cathode plate and an anode plate, each being coated with the cathode active material and the anode active material, are arranged with a separator being interposed between them, and a battery case which seals and houses the electrode assembly together with an electrolytic solution.

Generally, the lithium secondary battery may be classified based on the shape of the exterior material into a can-type secondary battery in which the electrode assembly is built into a metal can, and a pouch-type secondary battery in which the electrode assembly is built into a pouch of an aluminum laminate sheet.

In the case of a secondary battery used for small-sized devices, two to three battery cells are arranged, but in the case of a secondary battery used for a middle- or large-sized device such as an automobile, a battery module in which a large number of battery cells are electrically connected is used. In such a battery module, a large number of battery cells are connected to each other in series or parallel to form a cell assembly, thereby improving capacity and output. One or more battery modules can be mounted together with various control and protection systems such as a BMS (battery management system) and a cooling system to form a battery pack.

In the battery pack configured to gather a plurality of battery modules, heat generated from multiple battery cells can be added up in a narrow space, so that the temperature can rise more quickly and excessively. In other words, battery modules in which multiple battery cells are stacked and a battery pack equipped with these battery modules can obtain high output, but it is not easy to remove heat generated from the battery cells during charging and discharging. When the heat dissipation of battery cells is not properly performed, deterioration of the battery cells is accelerated, the lifespan is shortened, and the possibility of explosion or ignition increases.

Moreover, in the case of a battery module included in a vehicle battery pack, it is frequently exposed to direct sunlight and may be placed under high-temperature conditions such as summer or desert areas. Further, since multiple battery modules are concentratedly arranged to increase the mileage of the vehicle, a thermal runaway phenomenon generated in any one of the battery modules can easily propagate to an adjacent battery module, which may eventually lead to ignition or explosion of the battery pack itself.

Therefore, there is a need to design a model that does not lead to fire or explosion of the battery pack itself, even if a thermal runaway phenomenon occurs in any one of the battery modules.

### [DETAILED DESCRIPTION OF THE INVENTION]

### [Technical Problem]

It is an object of the present disclosure to provide a battery module that can suppress high-temperature gas and flame from being ejected even if a thermal runaway phenomenon occurs within the battery module.

However, the problem to be solved by embodiments of the present disclosure is not limited to the above-described problems, and can be variously expanded within the scope of the technical idea included in the present disclosure.

### [Technical Solution]

According to an aspect of the present disclosure, there is provided a battery module comprising: a battery cell stack in which a plurality of battery cells are stacked; a module frame that houses the battery cell stack; end plates located on one side and the other side of the battery cell stack and having an opening formed therein; a terminal busbar exposed through the opening; and a blocking member that surrounds the terminal busbar, wherein upon the rise of internal pressure of the module frame, the blocking member moves to close a gap between the opening and the terminal busbar.

The blocking member may move along the terminal busbar to close a gap between the opening and the terminal busbar.

The blocking member may comprise a body portion surrounding the terminal busbar, and an extension portion extending in the outer peripheral direction from the body portion.

Upon the rise of internal pressure of the module frame, the blocking member moves along the terminal busbar, and at least one of the body portion and the extension portion may close a gap between the inner surface of the opening and the terminal busbar.

The battery module may further comprise a busbar frame located between the battery cell stack and the end plate, and an insulating cover located between the busbar frame and the end plate, wherein an opening hole may be formed in a portion of the insulating cover corresponding to the opening.

Upon the rise of internal pressure of the module frame, a stepped structure formed by the body portion and the extension portion may come into close contact with the inner surface of the opening hole.

The terminal busbar may comprise a first portion connected to the electrode lead of the battery cell, and a second portion exposed through the opening.

The terminal busbar may further comprise a bending portion formed between the first portion and the second portion.

The blocking member may be located so as to wrap around the second portion.

The blocking member may comprise at least one of a foam material, a resin material, a silicone material, and a rubber material.

### [Advantageous Effects]

According to the embodiments of the present disclosure, when a thermal runaway phenomenon occurs in the battery module, the internal pressure of the battery module rises, whereby the blocking member can move to close a gap formed in the battery module. That is, the ejection of high-temperature gas and flame can be cancelled by using the rise of internal pressure of the battery module.

The effects of the present disclosure are not limited to the effects mentioned above and additional other effects not described above will be clearly understood from the description of the appended claims by those skilled in the art.

### [BRIEF DESCRIPTION OF THE DRAWINGS]

Fig. 1 is a perspective view of a battery module according to one embodiment of the present disclosure;
Fig. 2 is an exploded perspective view of the battery module of Fig. 1;
Fig. 3 is a perspective view showing a state in which an end plate and an insulating cover are removed in a battery module according to one embodiment of the present disclosure;
Figs. 4(a) and (b) are diagrams showing a terminal busbar and a blocking member included in the battery module of Fig. 3;
Fig. 5 is a perspective view showing an end plate and an insulating cover according to one embodiment of the present disclosure; and
Figs. 6 to 8 are diagrams showing a state cut along the cutting line A-A' of Fig. 1.

### [DETAILED DESCRIPTION OF THE EMBODIMENTS]

Hereinafter, various embodiments of the present disclosure will be described in detail with reference to the accompanying drawings so that those skilled in the art can easily carry out them. The present disclosure may be modified in various different ways, and is not limited to the embodiments set forth herein.

Portions that are irrelevant to the description will be omitted to clearly describe the present disclosure, and like reference numerals designate like elements throughout the description.

Further, in the drawings, the size and thickness of each element are arbitrarily illustrated for convenience of description, and the present disclosure is not necessarily limited to those illustrated in the drawings. In the drawings, the thickness of layers, regions, etc. are exaggerated for clarity. In the drawings, for convenience of description, the thicknesses of some layers and regions are exaggerated.

In addition, it will be understood that when an element such as a layer, film, region, or plate is referred to as being "on" or "above" another element, it can be directly on the other element or intervening elements may also be present. In contrast, when an element is referred to as being "directly on" another element, it means that other intervening elements are not present. Further, the word "on" or "above" means disposed on or below a reference portion, and does not necessarily mean being disposed on the upper end of the reference portion toward the opposite direction of gravity.

Further, throughout the description, when a portion is referred to as "including" or "comprising" a certain component, it means that the portion can further include other components, without excluding the other components, unless otherwise stated.

Further, throughout the description, when referred to as "planar", it means when a target portion is viewed from the upper side, and when referred to as "cross-sectional", it means when a target portion is viewed from the side of a cross section cut vertically.

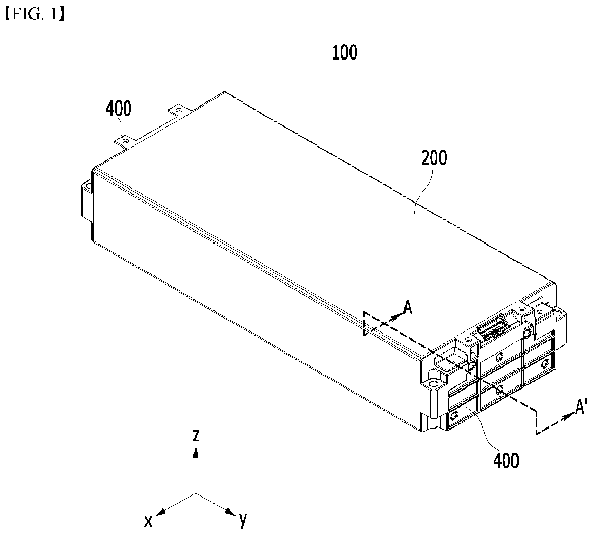

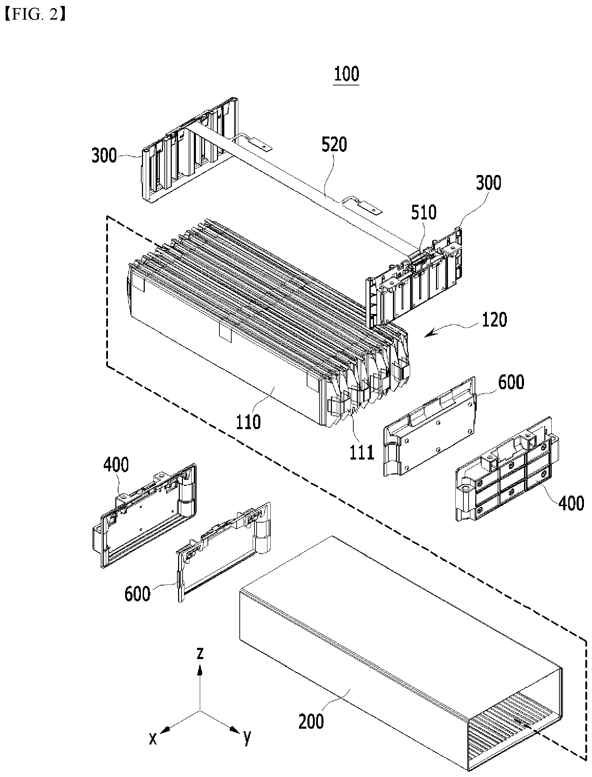

Fig. 1 is a perspective view of a battery module according to one embodiment of the present disclosure. Fig. 2 is an exploded perspective view of the battery module of Fig. 1.

Referring to Figs. 1 and 2, a battery module 100 according to one embodiment of the present disclosure includes a battery cell stack 120 in which a plurality of battery cells 110 are stacked; a module frame 200 that houses the battery cell stack 120; and end plates 400 located on one side and the other side of the battery cell stack 120.

First, the battery cell 110 is preferably a pouch-type battery cell. Such a battery cell 110 can be formed in a rectangular sheet-like structure. For example, the battery cell 110 according to the present embodiment has a structure in which two electrode leads 111 face each other and each protrude on one side and the other side. More specifically, the electrode leads 111 are connected to an electrode assembly (not shown), and are protruded from the electrode assembly (not shown) to the outside of the battery cell 110.

Meanwhile, the battery cell 110 can be manufactured by heat-sealing the outer periphery of a pouch-type cell case in a state in which an electrode assembly (not shown) is housed in the pouch-type cell case. The pouch-type cell case may be composed of a laminated sheet including a resin layer and a metal layer.

Meanwhile, only the battery cell 110 having a structure in which the electrode lead 111 protrudes in both directions of one side and the other side has been described, but as another embodiment of the present disclosure, it is, of course, possible to have a unidirectional pouch-type battery cell in which the electrode lead protrudes together in one direction.

The battery cell 110 may be configured in a plurality of numbers, and the plurality of battery cells 110 may be stacked so as to be electrically connected to each other, thereby forming a battery cell stack 120. For example, the plurality of battery cells 110 may be stacked along a direction parallel to the x-axis as shown in Fig. 2. The pouch-type cell case generally has a laminated structure of resin layer/metal thin film layer/resin layer. For example, when the surface of the pouch-type cell case is formed of an O (oriented)-nylon layer, it tends to slide easily due to external impact when stacking a plurality of battery cells to form a medium or large-sized battery module. Therefore, in order to prevent this problem and maintain a stable stacked structure of battery cells, an adhesive member such as a cohesive-type adhesive such as a double-sided tape or a chemical adhesive bonded by chemical reaction during adhesion can be attached to the surface of the pouch-type battery case to form a battery cell stack 120.

The battery cell stack 120 is housed in the module frame 200. The module frame 200 may be a metal frame having a shape in which both surfaces are opened. More specifically, the module frame 200 may be opened in both directions in which the electrode leads 111 and 112 protrude with reference to the battery cell stack 120. However, the module frame 200 shown in Fig. 2 is an exemplary structure, and the shape thereof is not particularly limited as long as it can house the battery cell stack 120. The module frame 200 of Fig. 2 is shown as a metal plate-shaped mono frame in which the upper surface, the lower surface and both side surfaces are integrated, but other shapes, such as in which an upper cover is joined to a U-shaped frame with an opened upper portion, and a shape in which a U-shaped frame and an inverted U-shaped frame are coupled with each other, or the like, are possible.

End plates 400 are located on one side and the other side of the battery cell stack 120. That is, the end plates 400 may be located on the opened both surfaces of the module frame 200.

The module frame 200 and the end plate 400 can be joined by welding or the like in a state in which the corresponding corner portions come in contact with each other. However, this is an exemplary method, and bolt fastening, hook fastening, or the like can be applied as a mechanical coupling form. The battery cell stack 120 is housed in the space formed by the module frame 200 and the end plates 400, thereby capable of physically protecting the battery cell stack 120. For this purpose, the module frame 200 and the end plate 400 may include a metal material having a predetermined strength such as aluminum or a plastic material.

Meanwhile, the battery module 100 according to the present embodiment may include a busbar frame 300 located between the battery cell stack 120 and the end plate 400, and an insulating cover 600 located between the busbar frame 300 and the end plate 400. That is, the busbar frame 300, the insulating cover 600, and the end plate 400 may be sequentially located from the battery cell stack 120 to the outside. Similarly to the end plate 400, the busbar frame 300 and the insulating cover 600 may each be configured in plural numbers.

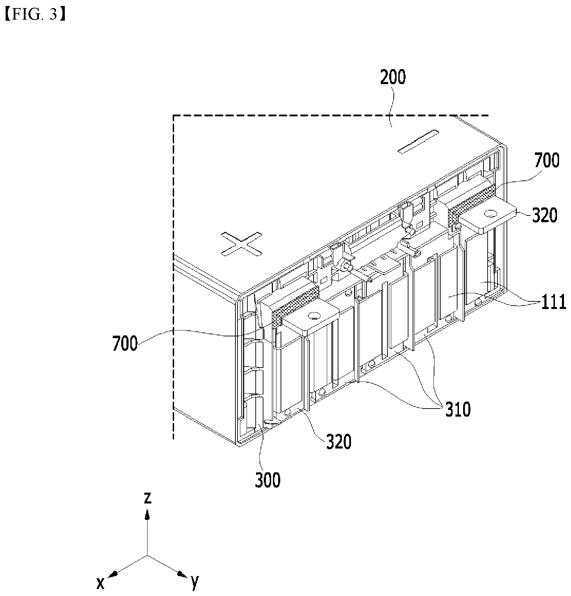

Next, a terminal busbar and an opening formed in the end plate according to the present embodiment will be described in detail with reference to Figs. 3 to 5, and the like.

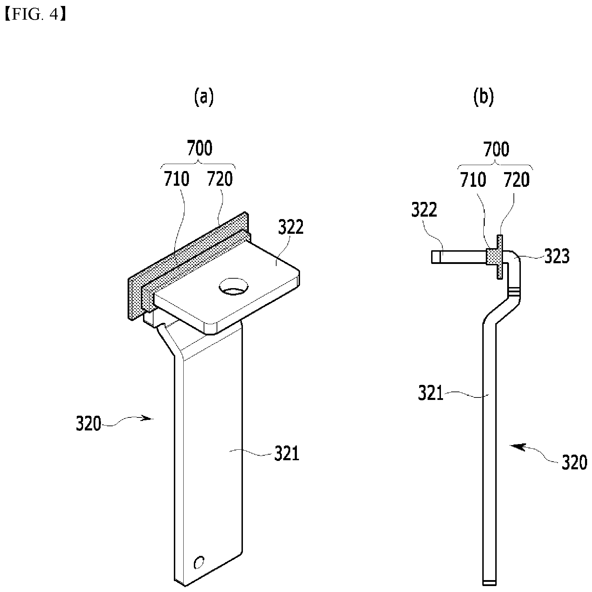

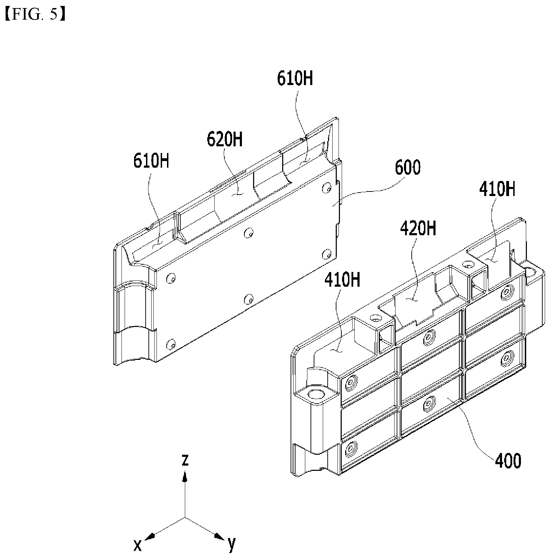

Fig. 3 is a perspective view showing a state in which an end plate and an insulating cover are removed in a battery module according to one embodiment of the present disclosure. Figs. 4(a) and (b) are diagrams showing a terminal busbar and a blocking member included in the battery module of Fig. 3. Fig. 5 is a perspective view showing an end plate and an insulating cover according to one embodiment of the present disclosure.

Referring to Figs. 2 to 5, the battery module 100 according to one embodiment of the present disclosure includes a terminal busbar 320. In particular, an opening 410H is formed in the end plate 400, and the terminal busbar 320 is exposed through the opening 410H.

More specifically, the battery module 100 according to the present embodiment may include a busbar 310 and a terminal busbar 320. The busbar 310 and the terminal busbar 320 may be mounted on the busbar frame 300.

The busbar 310 and the terminal busbar 320 can be joined to the electrode lead 111 of the battery cells 110 in order to electrically connect the plurality of battery cells 110. Specifically, the busbar frame 300 on which the busbar 310 and the terminal busbar 320 are mounted can be disposed on the one side (y-axis direction) and the other side (-y-axis direction) of the battery cell stack 120. The one side (y-axis direction) and the other side (-y-axis direction) of the battery cell stack 120 correspond to the direction in which the electrode leads 111 of the battery cells 110 protrude. That is, as described above, any one of the busbar frames 300 may be located between any one of the end plates 400 and the battery cell stack 120.

A lead slit may be formed at the busbar frame 300, and the electrode leads 111 of the battery cells 110 can be bent after passing through the lead slit, and joined to the busbar 310 or the terminal busbar 320. As long as physical and electrical connection is possible, the joining method is not particularly limited, and weld-joining can be performed as an example. That is, the battery cells 110 may be electrically connected to each other via the busbar 310.

Meanwhile, a part of the terminal busbar 320 may be exposed to the outside of the battery module 100. Specifically, an opening 410H is formed in the end plate 400, and a part of the terminal busbar 320 may be exposed through such an opening 410H. More specifically, the terminal busbar 310 includes a first portion 321 connected to the electrode lead 111 of the battery cells 110 and a second portion 322 exposed to the outside through the opening 410H.

The second portion 322 exposed to the outside of the battery module 100 may be connected to another battery module or a BDU (Battery Disconnect Unit) to form a HV (High Voltage) connection. Here, the HV connection is a connection that functions as a power source for supplying power, and refers to a connection between battery cells or a connection between battery modules. That is, the battery module 100 can be electrically connected to other adjacent battery modules via the terminal busbar 320.

Meanwhile, the battery module 100 according to the present embodiment may further include a module connector 510 and a connection cable 520. The module connector 510 and the connection cable 520 are for connecting LV (Low voltage), wherein the LV connection means a sensing connection for sensing and controlling the voltage and temperature of the battery cell. The voltage information and temperature information of the battery cell 110 can be measured through the module connector 510 and the connection cable 520 and transmitted to an external BMS (battery management system).

The module connector 510 is configured so as to transmit and receive signals to and from an external control device. A connector opening 420H is formed in the end plate 400, the module connector 510 is exposed to the outside of the battery module 100 through such a connector opening 420H, and the module connector 510 can be connected to an external BMS.

The connection cable 520 is configured to connect the module connector 510 and the battery cell 110, and may be a flexible printed circuit board (FPCB) or a flexible flat cable (FFC). The module connector 510 and the connection cable 520 may be located on the upper end of the busbar frame 300.

Voltage information on the plurality of battery cells 110 is transmitted to an external BMS (Battery Management System) through the connection cable 520 and the module connector 510 in sequence.

Meanwhile, as shown in Fig. 2, two busbar frames 300 may be arranged on one side and the other side of the battery cell stack 120, respectively. At this time, the module connector 510 is located only in any one busbar frame 300, and a module connector may not be located in another busbar frame 300. A connection cable 520 can be extended from the module connector 510 to the other busbar frame 300 so as to be connected to the busbars 310 located in the other busbar frames 300. The extended portion of the connection cable 520 may be located on the upper portion of the battery cell stack 120. In addition, a temperature sensor may be provided on a portion of the connection cable 520 located on the upper portion of the battery cell stack 120. Through such a temperature sensor, temperature information inside the battery module 100 may sequentially pass through a connection cable 520 and a module connector 510 and be transmitted to an external BMS (Battery Management System).

Meanwhile, as described above, the battery module 100 according to the present embodiment may include an insulating cover 600 located between the busbar frame 300 and the end plate 400. The insulating cover 600 is preferably configured in plural numbers. The insulating cover 600 may include an electrically insulating material, and interrupts the busbar 310 or the terminal busbar 320 from contacting the end plate 400.

Referring to Fig. 2, Fig. 3 and Fig. 5, an opening hole 610H may be formed in a portion of the insulating cover 600 corresponding to the opening 410H of the end plate 400. Also, a connector opening hole 620H may be formed in a portion of the insulating cover 600 corresponding to the connector opening 420H of the end plate 400.

The terminal busbar 320 according to the present embodiment may be exposed to the outside of the battery module 100 through the opening hole 610H of the insulating cover 600 and the opening 410H of the end plate 400. Also, the module connector 510 may be exposed to the outside of the battery module 100 through the connector opening hole 620H of the insulating cover 600 and the connector opening 420H of the end plate 400.

Meanwhile, the terminal busbar 320 is configured in plural numbers, one of which may function as a cathode terminal of the battery module 100, and the other may function as an anode terminal of the battery module 100. Thereby, each of the opening 410H and the opening hole 610H may also be configured in plural numbers.

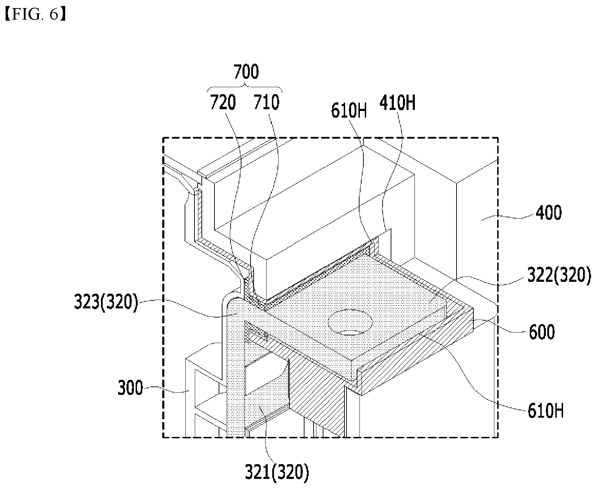

Next, a blocking member according to one embodiment of the present disclosure will be described in detail with reference to Figs. 6 to 8 and the like.

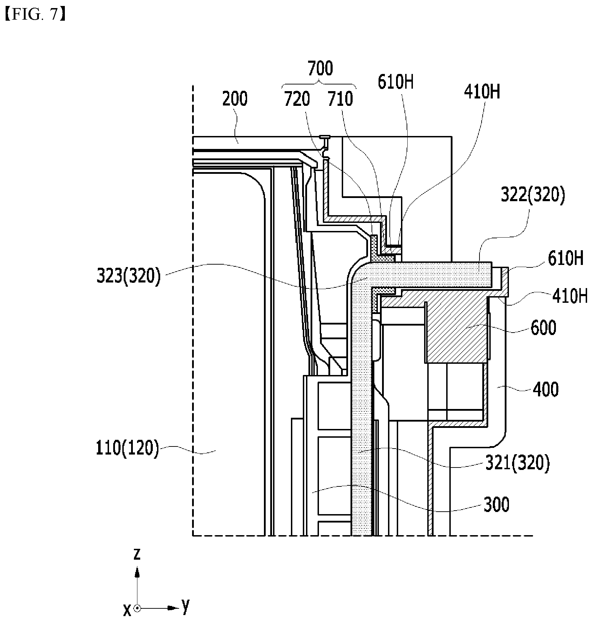

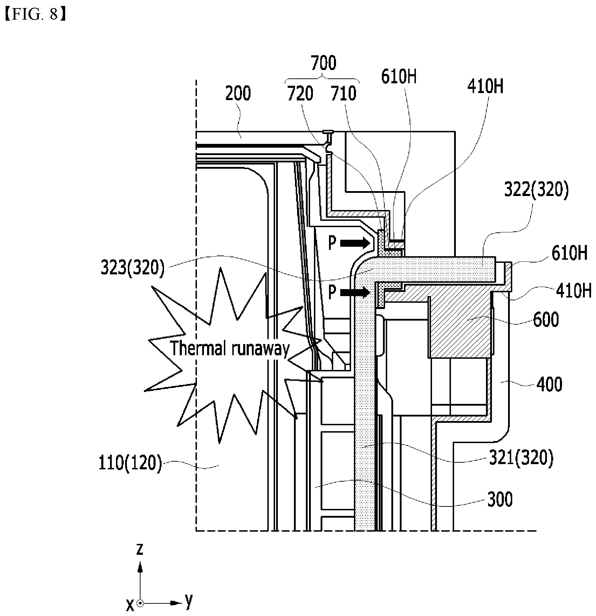

Figs. 6 to 8 are diagrams showing a state cut along the cutting line A-A' of Fig. 1. Specifically, Fig. 6 is a perspective view showing a state cut along the cutting line A-A 'of Fig. 1, and Figs. 7 and 8 are cross-sectional views showing cross sections taken along the cutting line A-A' of Fig. 1. Also, Fig. 7 is a cross-sectional view showing the battery module in a normal state, and Fig. 8 is a cross-sectional view showing a state in which a thermal runaway phenomenon occurs in a battery module.

Referring to Figs. 3, 4, 6 and 7 together, the battery module 100 according to the present embodiment includes a blocking member 700 that surrounds the terminal busbar 320. Upon the rise of internal pressure of the module frame 200, the blocking member 700 moves to close a gap between the opening 410H and the terminal busbar 320. The internal pressure of the module frame 200 means the air pressure in the internal space of the module frame 200 in which the battery cell stack 120 is housed. The rise of internal pressure of the module frame 200 means that a large amount of gas is generated in the internal space of the module frame 200.

A thermal runaway phenomenon may occur in the battery cells 110 inside the battery module 100. One illustration of the thermal runaway phenomenon is as follows. Physical, thermal, and electrical damages to the battery cell 110, including overcharging, may occur and thus, the internal pressure of the battery cell 110 may increase. When the internal pressure exceeds the fusion strength limit of the pouch-type cell case of the battery cell 110, high-temperature heat, venting gas, etc. generated from the battery cell 110 may be ejected to the outside of the battery cell 110.

The thermal runaway phenomenon generated in one battery cell can spread to other battery cells by convection effect, and eventually, high-temperature gas and flame may be generated inside the battery module 100. The generated high-temperature gas and flame may be ejected to the outside through the opening 410H of the end plate 400, and may damage adj acent battery modules or induce another thermal runaway phenomenon in adjacent battery modules. Eventually, a thermal runaway phenomenon propagates to a plurality of battery modules, causing explosion and ignition of the battery pack.

Thus, in the battery module 100 according to the present embodiment, a blocking member 700 that can move according to the rise of internal pressure of the module frame 200 is provided inside the opening 410H of the end plate 400.

When the thermal runaway phenomenon occurs, gas is ejected from the battery cells, and the internal pressure of the module frame 200 rises. When the internal pressure of the module frame 200 rises, the blocking member 700 surrounding the terminal busbar 320 is pushed out by the increased internal pressure P and moves along the terminal busbar 320, thus closing the gap between the opening 410H and the terminal busbar 320. Thereby, it is possible to suppress high-temperature gas or flame from being ejected to the outside of the battery module 100. That is, the ejection of high-temperature gas and flame can be cancelled by using the rise of internal pressure of the battery module 100. Ultimately, it is possible to prevent a thermal runaway phenomenon generated in one battery module from propagating to other battery modules.

In particular, as shown in Figs. 4(a) and (b), the blocking member 700 according to the present embodiment may include a body portion 710 surrounding the terminal busbar 320 and an extension portion 720 extending in an outer peripheral direction from the body portion 710. Thereby, the body portion 710 and the extension portion 720 may form a stepped structure. Here, the outer peripheral direction may correspond to a direction from one side of the body portion 710 toward the opposite side from the position where the second portion 322 of the terminal busbar 320 is located.

Referring to Figs. 6 to 8, when the blocking member 700 is pushed by the increased internal pressure P during the thermal runaway phenomenon and moves toward the opening 410H, at least one of the extension portion 720 and the body portion 710 can close a gap between the inner surface of the opening part 410H and the terminal busbar 320.

While the body portion 710 is inserted into the gap between the inner surface of the opening 410H and the terminal busbar 320, the gap between the inner surface of the opening 410H and the terminal busbar 320 is closed by at least one of the extension portion 720. and the body portion 710.

Meanwhile, as described above, the battery module 100 according to the present embodiment may further include an insulating cover 600 located between the busbar frame 300 and the end plate 400, and an opening hole 610H may be formed in a portion of the insulating cover 600 corresponding to the opening 410H. The second portion 322 of the terminal busbar 320 may be exposed to the outside of the battery module 100 through the opening hole 610H of the insulating cover 600 and the opening 410H of the end plate 400.

At this time, the opened area of the opening hole 610H may be smaller than that of the opening 410H so as to secure an insulation property, and an inner surface of the opening hole 610H may be located closer to the terminal busbar 320 than an inner surface of the opening 410H. When the internal pressure of the module frame rises due to the thermal runaway phenomenon, the blocking member 700 moves due to the increased internal pressure P, and a stepped structure formed by the body portion 710 and the extension portion 720 can come into close contact with the inner surface of the opening hole 610H. That is, while the body portion 710 is inserted into the gap between the inner surface of the opening hole 610H and the terminal busbar 320, the body portion 710 can come into close contact with the inner surface of the opening hole 610H. Since the width of the extension portion 720 is wider than the interval of gap between the inner surface of the opening hole 610H and the second portion 322, the blocking member 700 can be fixed while closing the gap between the inner surface of the opening hole 610H and the second portion 322.

Meanwhile, as described above, the terminal busbar 320 may include a first portion 321 connected to the electrode lead 111 of the battery cell 110 and a second portion 322 exposed to the outside through the opening 410H. Further, the terminal busbar 320 may further include a bending portion 323 formed between the first portion 321 and the second portion 322. Thereby, one surface of the first portion 321 and one surface of the second portion 322 may be perpendicular to each other.

Although not specifically shown in the figure, the terminal busbar 320 may be connected to another battery module or a BDU (battery disconnect unit) via a connecting member (not shown). The terminal busbar 320 and a connecting member (not shown) can be j oined by a method such as welding. At this time, a bending portion 323 that has bent is formed on the terminal busbar 320, one surface of the second portion 322 is arranged in parallel with a ground surface, and thus designed to facilitate junction between the second portion 322 and a connecting member (not shown).

In accordance with the above structure, a gap is naturally formed between the inner surface of the opening 410H and the bending portion 323 or between the inner surface of the opening 410H and the second portion 322, and high-temperature gas and flame may be concentratedly ejected through the gap.

The blocking member 700 according to the present embodiment may be located so as wrap around the second portion 322 of the terminal busbar 320. In particular, the blocking member 700 may be located so as wrap around a region corresponding to the inside of the opening 410H and the opening hole 610H of the second portion 322. The internal pressure P increased due to thermal runaway phenomenon pushes out the extension portion 720 of the blocking member 700. Thereby, the body portion 710 wrapping around the second portion 322 moves toward the opening 410H and the opening hole 610H along the second portion 322. Eventually, the body portion 710 is inserted between the inner surface of the opening 410H and the terminal busbar 320, and more specifically, inserted between the inner surface of the opening hole 610H and the terminal busbar 320.

In the same manner as described above, the blocking member 700 may close a gap through which high-temperature gas and flame may be ejected by using the rise of internal pressure of the battery module. Ultimately, it is possible to prevent a thermal runaway phenomenon generated in one battery module from propagating to other battery modules.

Meanwhile, the blocking member 700 according to the present embodiment may include at least one of a foam material, a resin material, a silicon material, or a rubber material. Also, in order to withstand high-temperature gas or flame, the material constituting the blocking member 700 is preferably flame retardant.

Meanwhile, the blocking member 700 according to another embodiment of the present disclosure may include a heat-resistant material that can expand at a certain temperature or higher. In one example, the blocking member 700 may include at least one of an epoxy-based resin, a vinyl chloride-based resin, or a fluorine-based resin. Also, the certain temperature may be about 100 degrees Celsius. When thermal runaway phenomenon occurs, the internal temperature of the battery module 100 rises. As the temperature rises, the blocking member 700 including the materials may expand. The expanded blocking member 700 may be more effective in closing a gap between the opening 410H and the terminal busbar 320.

The terms representing directions such as the front side, the rear side, the left side, the right side, the upper side, and the lower side have been used in the present embodiment, but the terms used are provided simply for convenience of description and may become different according to the position of an object, the position of an observer, or the like.

The one or more battery modules according to embodiments of the present disclosure described above can be mounted together with various control and protection systems such as a BMS(battery management system), a BDU(battery disconnect unit), and a cooling system to form a battery pack.

The battery module or the battery pack can be applied to various devices. For example, it can be applied to vehicle means such as an electric bike, an electric vehicle, and a hybrid electric vehicle, and may be applied to various devices capable of using a secondary battery, without being limited thereto.

Although preferred embodiments of the present disclosure have been described in detail above, the scope of the present disclosure is not limited thereto, and various modifications and improvements can be made by those skilled in the art using the basic concepts of the present disclosure, which are defined in the appended claims, which also falls within the scope of the present disclosure.

### [Description of Reference Numerals]

100: battery module
120: battery cell stack
200: module frame
300: busbar frame
320: terminal busbar
400: end plate
410H: opening
700: blocking member

## Claims

1. A battery module comprising:
a battery cell stack in which a plurality of battery cells are stacked;
a module frame that houses the battery cell stack;
end plates located on one side and the other side of the battery cell stack and having an opening formed therein;
a terminal busbar exposed through the opening; and
a blocking member that surrounds the terminal busbar,
wherein upon the rise of internal pressure of the module frame, the blocking member moves to close a gap between the opening and the terminal busbar.

2. The battery module according to claim 1, wherein:
the blocking member moves along the terminal busbar to close a gap between the opening and the terminal busbar.

3. The battery module according to claim 1, wherein:
the blocking member comprises a body portion surrounding the terminal busbar, and an extension portion extending in the outer peripheral direction from the body portion.

4. The battery module according to claim 3, wherein:
upon the rise of internal pressure of the module frame, the blocking member moves along the terminal busbar, and
at least one of the body portion and the extension portion closes a gap between the inner surface of the opening and the terminal busbar.

5. The battery module according to claim 3, further comprising:
a busbar frame located between the battery cell stack and the end plate, and an insulating cover located between the busbar frame and the end plate,
wherein an opening hole is formed in a portion of the insulating cover corresponding to the opening.

6. The battery module according to claim 5, wherein:
upon the rise of internal pressure of the module frame, a stepped structure formed by the body portion and the extension portion comes into close contact with the inner surface of the opening hole.

7. The battery module according to claim 1, wherein:
the terminal busbar comprises a first portion connected to the electrode lead of the battery cell, and a second portion exposed through the opening.

8. The battery module according to claim 7, wherein:
the terminal busbar further comprises a bending portion formed between the first portion and the second portion.

9. The battery module according to claim 7, wherein:
the blocking member is located so as to wrap around the second portion.

10. The battery module according to claim 1, wherein:
the blocking member comprises at least one of a foam material, a resin material, a silicone material, and a rubber material.

11. A battery pack comprising the battery module as set forth in claim 1.
